# EUROPEAN PATENT SPECIFICATION

(11) **EP 2 237 098 B1**
(45) Date of publication and mention of the grant of the patent: **10.07.2013**
(21) Application number: 09075348.4
(22) Date of filing: 07.08.2009
(51) Int. Cl.: G02B 27/01

(54) **Head mounted display apparatus**
Am Kopf getragenes Anzeigegerät
Dispositif d'affichage porté sur la tête

(30) Priority: 05.04.2009 PT 10449309
(43) Date of publication of application: 06.10.2010
(73) Proprietor: Marques Martins, Miguel Carlos Quintano Serra, 1495-144 Alges (PT)
(72) Inventor: Martins, Miguel Marques, 1495-144 Miraflores-Alges (PT)

(56) References cited:
- EP-A1- 0 825 470
- US-A- 4 439 755
- US-A- 6 016 160
- US-B1- 6 356 392

## Description

The present invention relates to an image display device having an image source generating an image, a (plate) beam splitter, positioned at 45° to the main optical path, to project and focus the image generated by the image source into the entrance pupil of the human eye, two achromatic standard doublet lenses positioned perpendicularly to the main optical path and placed between the image source and the beam splitter, and configured to amplify, collimate and correct optical aberrations of the said image, wherein the image source, beam splitter and the doublet lenses are in an on-axis configuration and the image display device comprises two mounting brackets parallel to the main optical axis, each having an extremity part holding an edge of the beam splitter and the other extremity pivotally attached to a housing, allowing the brackets and beam splitter to rotate in an axis perpendicular to the main optical path.

### Field of the Invention

The present invention is related to an image display device that can be used as a Head Mounted Display (abbreviated as HMD). A specific category of HMDs are the see-through HMD. These see-through HMDs allow the user to see virtual information in front of his/her eyes which is at the same time superimposed to the real scenario without obstructing the user field-of-view. The HMD of the present invention can be used in several applications, such as, maintenance, logistics, civil protection, search and rescue missions, retail services, professional services, government services, transportation, navigation and guidance systems, medical care operations, telecommunication services, navy, army soldiers, patrollers, tropes, aeronautic, aerospace, astronaut activities, sports, industrial manufacturing, hardware testing, assembly, tourism, shopping, vehicle service, augmented reality and virtual reality.

### Discussion of prior art

Different types of see-through HMDs are known from, for example, the International Patent document WO 2008/089417 A2, the US Patent documents 6731434 B1 (May 4, 2004), US 5661604 (Aug. 26/1997)), US2004/0212776 A1, from European Patent Application EP 1 538 477 A1 and EP0825470 A1, and US6356392 B1. Generally the see-through HMDs comprise a housing having therein an image source and a set of projection optical elements (lenses, mirrors, prisms and beam splitters, for example), some of which being inevitably placed in front of the user's eyes. Normally they have an off-axis optical configuration, which introduces significant optical aberrations that need to be accounted for and subsequently corrected, and additionally imply much less tolerance to the misalignment of the optical elements. In order to correct these optical aberrations, additional or specific (custom made) optical elements are normally used, for example, doublet lenses or aspheric lenses. The need for an optimum optical alignment between all the elements requires very low tolerances during the manufacturing of their supporting structures (normally the interior of the housing) in order to accurately accommodate them along the optical axes. Such complex supporting structures (housing), and the difficulties during assembly imply more costs to the production of the HMD.

In particular the International patent document (WO 2008/089417 A2) shows a device comprising several optical and non-optical elements, such as, lenses, polarization beam splitters, apertures and quarter wave converters, therefore increasing the number of elements of the HMD. The apertures included in the optical configuration create additional diffractions, and consequently interferences, thus decreasing the image quality. Moreover, this device has two optical components in front of the user's eyes, the beam splitter and the retro-reflector screen, which influences and restricts the see-through capability of the device. All these additional elements in such off-axis configuration contribute to a bigger, heavier, and thus uncomfortable device which is intended to be used on the head. It also implies higher manufacturing costs. Being heavier and bulky, the device tends to become loose, and therefore a more complex mechanical structure needs to be used to provide a proper fixation of the device.

The present invention proposes to solve the above mentioned problems by the use of a device having an on-axis configuration with large tolerance to misalignments and only one slim discrete COTS (commercial of the shell) optical element removable and adjustable positioned in front of the user eyes.

### Brief description of the drawings

Figure 1 shows a schematic view of an optical configuration of an image display device according to the invention.
Figure 2 a) and b) show, respectively, a front and side view of a housing of an image display device according to the invention.

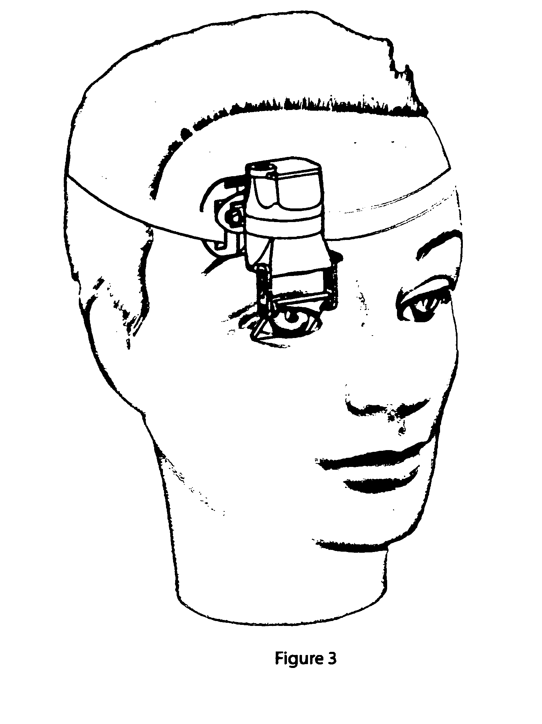

Figure 3 shows an image display device according to the invention with a head mounted support in a user's head.

### Description of the Invention

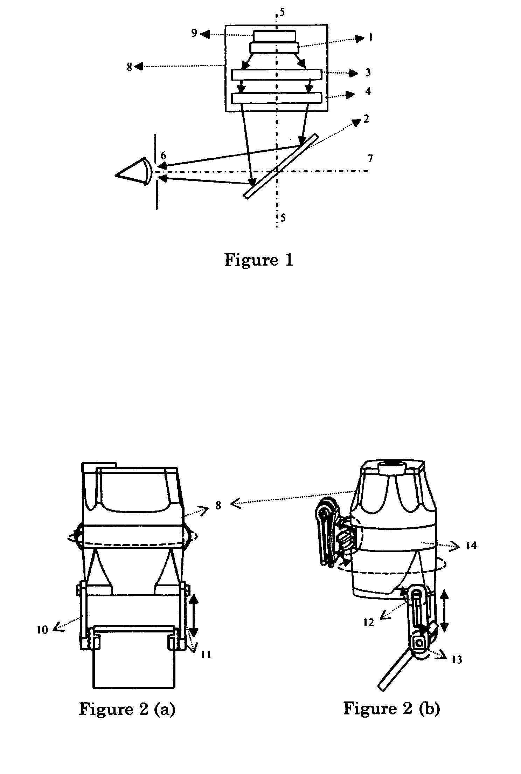

Fig 1 shows the optical configuration of the image display device according to the present invention. It comprises an image source (1), first (3) and second (4) achromatic doublet lenses, a beam splitter (2), and a housing (8). The image source and the achromatic lenses and the beam splitter define a main optical path (5), shown in figure 1 by the dashed line, and are disposed in an on-axis configuration since the mechanical center of each of these elements is coincident with the main optical path.

The image source (1) generates an image that will pass through the two achromatic lenses (3,4) until it reaches the plate beam splitter (2) which is positioned preferably at 45° to the main optical path (5) projecting and focusing the image into the human's eye entrance pupil (6). Another optical path can be defined as the path from the beam splitter to the entrance pupil, shown in figure 1 by the doted line (7).

The image source and the two achromatic lenses are contained inside the housing. The image source used is an OLED microdisplay with the highest image resolution SXGA (1280x1024 pixels) available within this type of micro display devices, but it can be replaced by any other type of images sources, like, LCD, CRT, LCOS, AMOLED, or similar. The microdisplay (image source) is electrically connected to a driver electronics board (9). This driver electronics board can be placed on the top of the microdisplay inside the housing, or placed outside the housing.

The two achromatic standard doublet lenses are positioned perpendicularly to the main optical path and placed between the microdisplay and the beam splitter. Instead, of the achromatic doublet lenses other type of lenses can be used. This type of lenses is configured to amplify, collimate and correct optical aberrations of the image provided by the microdisplay. Although the device comprises at least one lens, preferably two achromatic doublet lenses, the optical path length needs to be adapted according to the number of lenses. It is noted that the total number of lenses might exceed two. As an example, the image display device may include three lenses or even more than three lenses. Further, at least one achromatic doublet lens could be used. As an example, the lens set may include one achromatic doublet lens and two or three single lenses, or two achromatic doublet lenses and two single lenses. Further, as an alternative, the lens set may include two aspheric custom made lenses. The lenses are easily assembled in their correct position inside the housing by means of a set of longitudinal (parallel to the main optical path) holders placed in slots formed at the internal periphery of the housing. The set of holders comprise abutting surfaces to confine and restrict the displacement of the lenses. Figure 2 a) and b) show, respectively, the front and side view of the housing of the image display device according to the present invention.

As can be seen from theses figures, on the top of the housing there is a cap with a small slot to pass an electrical cable to transmit the image signal, the electrical power and the control functions. This cap seals the top part of the housing by mean of screws or any other known mechanical fixation means. An opening is formed on the cap to access a vertical adjusting mechanism (parallel to the main optical axis) adapted to move the image source in two different directions (generally up and down). The adjusting mechanism comprises a first pillar, mechanically connected to the image source, with longitudinal surface walls sliding inside a hollow section of a second pillar and containing a spring in between. The first and second pillars have a longitudinal opening to receive a screw, and additionally the first pillar comprises a thread. The screw longitudinally crosses the first pillar, the spring and the second pillar, and it is screwed at the thread of the first pillar, thus moving up or down the image source because it is mechanically connected to the first pillar. The first and second spring may be replaced by another adjusting mechanism, such as, worm gear. In some cases the HMD may be produced without the adjusting mechanism and the opening on the cap part.

By changing the microdisplay position within the housing it is possible to slightly adjust the size (field-of-view) of the projected image in front of the eyes according to the users wish. Additionally, the mechanism also serves to precisely focus the projected image. For instance, the user can project the virtual image in the near eye sight if he is focused in a closer background or in the longer eye sight if he is focused in a distant background.

In a central region of the housing there is a part (14) in the periphery of the housing perpendicular to the main optical path that has an attaching mechanism comprising a male/female pair connector to connect the housing to a head mounted support. The male part of the connector can be integrally formed with the central part and the female part with the head mounted support or vice-versa. There are several configurations of male/female pair connectors available, depending on the type of the head mounted support that is intended to be used. The male/female pair connectors do not have necessarily be in this central housing region, but in any other convenient zone of the housing. The housing central part also comprises a rotating mechanism to allow the housing plus the beam splitter to rotate around the main optical path axis in order to compensate the head forefront inclination of different users. The rotation around the main optical path axis can be done in two opposite directions allowing the image display device to be used in the left or right eye of the user. As an alternative this central part may be suppressed and the male or female pair connector assumes a spherical configuration (or other known form) adapted to provide an equivalent rotation (consequently the same head forefront compensation) and additionally other degrees of freedom.

The head mounted support can be a headband, helmet, hat, spectacles, goggles or any other. For some particular applications the image display device comprise the head mounted support, the housing, plus a battery pack, a video camera, a sensor positioning unit, as well as, a small microprocessor board to enable wireless communication and voice recognition.

The housing constitutes a strong shield protection of the enclosed image source, its driver electronics board and achromatic lenses from environmental corrosive particles or against shock caused by falling objects. The housing is sealed on the bottom part by the second achromatic lens which is fixed by press fit to the housing, or by other mechanical fixation means.

The housing is manufactured using a light and resistant material which can be a metal (like aluminium), metal alloy or plastic (like epoxy, acrylic, high temperature polymers and others). The housing can be produced using injection moulding, stereolitography, SLS, Polyjet and other manufacturing methods.

The housing has a simple and very efficient design to avoid "noise" in the projected image resulting from internal reflections. Therefore, preferably, the internal part of the housing, such as the internal wall, at least partially includes a light dispersive surface, e.g. extending from the image source to the first achromatic lens configured to avoid that the internal reflections reach the entrance pupil. The internal wall of the housing is also coated with an anti-reflective and/or absorbent material (black paint) which, in combination with the dispersive wall, eliminates the undesired internal light reflections and consequently reduces the stray light to a minimum (increasing the signal-to-noise ratio). All the internal reflections are not redirected to the projection optics (achromatic lenses), therefore do not reach the beam splitter and subsequently do not influence the image seen by the user.

Depending on the type of image source used it might be advantageous to have a housing configuration that contributes to dissipate the amount of heat generated by the image source through a passive cooling system designed in the housing. This system comprises small openings for a hot air flow on the rear wall side of the housing and above the microdisplay (image source) level. This means that after several hours of using the image display device, the user will not complain of a warming area around the head, which would otherwise cause discomfort and difficulties using the device. This is another important feature, as other prior HMDs products (e.g. Nomad HMD) were discontinued because of this warming effect. Since the preferred image source type used (OLED) produces a negligible amount of heat, a cooling system is normally not required in this situation.

From figures 2 (a) and (b), the image display device comprises two mounting brackets, parallel to the main optical path and parallel to the head forefront plane, mechanically connecting the beam splitter to the housing. One is on the left side of the housing and the other one on the right side (see figure 2 a)). Each mounting bracket has a first pivot (12) mechanism in one end and a second pivot (13) mechanism in another end. The first pivot mechanism is attached to the bottom of the housing and the second pivot mechanism is attached to the beam splitter by means of a clamp holding two of its edges, i.e., the left and right side edges. The first and second pivot mechanisms allow the beam splitter to rotate in two axes perpendicular to the main optical path and parallel to the head forefront plane providing two degrees of freedom, therefore allowing the user to adjust the eye relief, as well as, to position the virtual image in an upper or lower area of the user field-of-view. On one side, the first pivot mechanism allows the rotation of the beam splitter (similar to a pendulum movement) to assure suffcient space to use eye correction glasses, in opposition to HMDs using eye-glass form. On the other side, the second pivot mechanism allows the beam splitter to rotate, within a certain acceptance angle range (preferably around 45°), providing the user the freedom to move the virtual image above, below or in front of the user horizontal line-of-sight. Optionally, the image display device comprises at least one mounting brackets, preferably two, if the same technical effects and robustness are guaranteed. Other known mechanical fixation means can be used instead of the mounting brackets (e.g. the beam splitter can be fixed by screws or other mechanical means to a frame or hole in the periphery of the beam splitter)

The mounting brackets (10, 11) also have a longitudinal slot to descend or to ascend the beam splitter position relatively to the user horizontal line-of-sight. This longitudinal slot in the mounting brackets provides a third degree of freedom to the beam splitter. This combination of movements (3 degrees of freedom) provided to the beam splitter allows a very intuitive and quick adjustment of the image into the entrance pupil, as well as, an easy adaptation of the image display device to any user head anatomy. This longitudinal slot is optional according to the intended use of the image display device.

The beam splitter is the last (and the only) optical element in front of the user's eye and is preferentially placed at 45° to the main optical path and is located below the bottom of the housing. The beam splitter may assume different geometric configurations, preferable a plate beam splitter having a preferable thickness of circa 3 mm, or alternatively a curved, prism or square beam splitter. Depending on its configuration the beam splitter may be hold by other mechanical means, rather than the clamp, as long as it is guaranteed a solid fixation point. The beam splitter is easily handled and manually removable from its clamp. The beam splitter can be quickly replaced by the user by a new beam splitter in case of damage or mistreatment, as well as, by other offering different optical image reflectivity coefficient when used in different environment light conditions (outdoor (strong daylight luminance) or indoor). In order to further improve the image contrast, the image display device comprises two buttons to increase or decrease the brightness according to the light conditions. In the current configuration the beam splitter has a 70% reflectivity/ 30% transmission coefficient in the visible spectrum of the light (400nm to 700nm) which represents the capacity to collect 70% of the maximum luminance available from the image source that goes into the entrance pupil of the human eye. For this reflectivity coefficient, the image projected into the user's eye has a luminance of around 300 cd/m² for a maximum 400 cd/m² luminance provided by the image source. Another advantage is that if 300 cd/m² is not enough for outdoor environment then the beam splitter can be rapidly replaced with a more suitable beam splitter (e.g. 80%/20%) in few seconds. Optionally, the beam splitter reflectivity coefficient may be chosen from a range between 45% to 99%, or others.

The optical configuration of the image display device does not compromise the resolution of the image provided by the image source that reaches the user entrance pupil. The image seen by the user has the same definition as an image seen on a PC monitor having the same resolution.

The present invention uses a slim beam splitter which is as imperceptible to the vision as the lens of eye correction glasses with no dioptric power (neutral lens), meaning no visual effort is required and headaches wouldn't not occur when wearing such device. Given the fact that the beam splitter has no frames (compared to some prior art HMDs or normal opaque frame glasses) the see-through capability of the image display device is enhanced because, in addition to the percentage of the environment light transmitted through the beam splitter to the human eye, there is an additional amount of light that also reaches the human eye which otherwise would be obstructed by opaque frames. Moreover, this image display device housing doesn't block the passage of the environmental light or reduce the regular user field-of-view. The housing is positioned in the region of the head out of that field-of-view.

Other advantage of this HMD is that the image source, beam splitter and the doublet lenses are in an on-axis (main optical path) configuration, which provides a greater tolerance to optical misalignments, thus a much easier way to align the optics along the optical path is obtained. Another advantage is that this optical configuration does not comprise apertures, so there are no additional diffractions.

The image display device preferably contains a driver electronics board, electrically connected to the image source, which can be placed inside the housing without increasing its volume or outside the housing. The driver electronics board receives the image signal from a peripheral equipment with specific interfaces, and is adapted to receive the electrical power (from a battery pack or other power source) and comprises input devices to control the brightness, contrast and flip of the image or other control functions, e.g on/off dedicated button, image format, image size, pixel aspect ratio, frame rate, display aspect ratio, etc.

The peripheral equipment can be a microprocessor fixed to the head mounted support or a handheld device usually placed at the waist of the user, allowing hands-free. The microprocessor is preferably configured to receive computer generated objects via wireless connection, having embedded a voice recognition application adapted to select the image to be displayed at the image source. The wireless communication link can be a short range communication provided according to bluethooth or Wi-Fi standards. The voice recognition application comprises a microphone or a head set to receive the vocal commands to be transmitted to the microprocessor. In the present invention, the microprocessor and the battery pack, which is also fixed to the head mounted support and connected to the driver board, constitute a complete wireless see-through Head-Mounted Display (HMD) solution. This means that no wires will put at risk the user safety in certain delicate operations, as it happens with current HMDs. This is a breakthrough product in this type of technology.

The handheld device can be of any type of handheld device, like, PDA, Pocket PC, smart phone, mobile phone, or similar. Instead of using a handheld device a kind of wireless pointer mouse (e.g gyroscope mouse, wrist mouse ...) can be arranged to select an image to be displayed at the image source.

For certain purposes, the image display device may also be combined with an inertial measurement unit or a sensor positioning or an instrument used to measure the strength and direction of the magnetic field and/or a video camera, these units being fixed to the head mounted support.

In one alternative, the bottom part of the housing has a coupling attaching mechanism adapted to receive a second housing with lenses therein to make the image display device to work as a compact projector, providing two in one capabilities, thus making this image display device a singular one.

## Claims

1. An image display device comprising:
- a main optical path (5);
- a housing (8) mountable to a person's head;
- an image source (1) associated with the housing and oriented substantially perpendicular to the main optical path, the source adapted to be driven by a remote signal in order to generate an image that is transmitted along the main optical path;
- a beam splitter (2), positioned in the main optical path and oriented at an angle of approximately 45° such that a beam propagating along the main optical path is deviated over a substantially right angle and that the image generated by the image source is focused into the entrance pupil of a human eye of the person;
- at least one, preferably two, lens (3,4) oriented substantially perpendicularly to the main optical path and placed between the image source and the beam splitter, and configured to amplify, collimate and correct optical aberrations of the said image,
wherein the image source, the beam splitter and at least one, preferably two, lens are on an on-axis configuration, and
wherein the device further comprises one or two mounting brackets (10, 11) positioned parallel to the main optical path and mechanically connecting the beam splitter to the housing, each of the one or two mounting brackets having a first pivot mechanism at one end and a second pivot mechanism at another end, the first pivot mechanism being attached to the housing and the second pivot mechanism being attached to the beam splitter,
**characterized in that**,
the second pivot mechanism is attached to the beam splitter by means of a clamp or other mechanical fixation means adapted to enable a sliding movement of the beam splitter.

2. An image display device according to claim 1, wherein the image source and at least one lens, preferably two, are contained inside the housing.

3. An image display device according to claim 1 further **characterized in that** the beam splitter is a plate beam splitter, curved, prism or square beam splitter, and is located externally to the housing.

4. An image display device according to claim 1 further **characterized in that** the optical beam splitter has a 45% to 99% reflectivity coefficient, preferably circa 70%.

5. An image display device according to claim 1, further comprising at least one achromatic doublet lens (3,4) oriented substantially perpendicularly to the main optical path and placed between the image source and the beam splitter, and configured to amplify, collimate and correct optical aberrations of the said image.

6. An image display device according to claim 1, further comprising three or more lenses (3,4) oriented substantially perpendicularly to the main optical path and placed between the image source and the beam splitter, and configured to amplify, collimate and correct optical aberrations of the said image.

7. An image display device according to claim 1 further **characterized in that** the one or two mounting brackets, through the first and second pivot mechanism, are adapted to rotate the beam splitter in two degrees of freedom, each mounting bracket having a slot adapted to move the beam splitter in one of two opposite directions providing a third degree of freedom to the beam splitter

## Patentansprüche

1. Eine Bildanzeigevorrichtung mit:
- Einem optischen Hauptstrahlengang (5);
- Einem Gehäuse (8), das am Kopf der Person angebracht werden kann;
- Einer Bildquelle (1), die zum Gehäuse gehört und im Wesentlichen senkrecht zum optischen Hauptstrahlengang ausgerichtet ist; die Quelle kann durch ein Fernsignal betrieben werden, um ein Bild zu erzeugen, das entlang des optischen Hauptstrahlengangs übertragen wird;
- Einem Strahlteiler (2), der auf dem optischen Hauptstrahlengang positioniert ist und in einem Winkel von ca. 45° ausgerichtet ist, sodass ein Strahl, der sich entlang des optischen Hauptstrahlengangs erstreckt,
über einen im Wesentlichen rechten Winkel abgelenkt wird und das von der Bildquelle erzeugte Bild auf die Netzhaut des menschlichen Auges fokussiert,
- Mindestens einer, vorzugsweise zwei Linsen (3,4), die hauptsächlich senkrecht zum optischen Hauptstrahlengang ausgerichtet sind und sich zwischen der Bildquelle und dem Strahlteiler befinden und so angeordnet sind, um das Bild zu vergrößern, zu kolliminieren und optische Fehler zu korrigieren,
wobei die Bildquelle, der Strahlteiler und zumindest eine, vorzugsweise zwei Linsen, auf einer Achse (*on-axis*) konfiguration angeordnet sind, und
wobei die Bildanzeigevorrichtung außerdem noch eine oder zwei Halterungsklammern (10,11) einschließt, die parallel zum optischen Hauptstrahlengang liegen und den Strahlteiler mechanisch mit dem Gehäuse verbinden; jede Halterungsklammer umfasst einen ersten Neigungs- und Drehmechanismus an einem Ende und einen zweiten Neigungs- und Drehmechanismus am anderen Ende, wobei der erste Neigungs- und Drehmechanismus am Gehäuseunterteil befestigt ist und der zweiter Neigungs- und Drehmechanismus mit dem Strahlteiler verbunden ist,
**dadurch gekennzeichnet,**
**dass** der zweite Neigungs- und Drehmechanismus am Strahlteiler durch eine Klemme oder
andere mechanische Befestigungsmittel angebracht ist, um eine gleitende Bewegung des Strahlteilers zu ermöglichen.

2. Eine Bildanzeigevorrichtung nach Anspruch 1, bei dem die Bildquelle und zumindest eine, vorzugsweise zwei Linsen, im Gehäuse enthalten sind.

3. Eine Bildanzeigevorrichtung nach Anspruch 1 noch **dadurch gekennzeichnet, dass** der Strahlteiler eine Strahlteilerplatte, ein gebogener, prismaförmiger oder quadratischer Strahlteiler ist und sich außerhalb des Gehäuses befindet.

4. Eine Bildanzeigevorrichtung nach Anspruch 1 noch **dadurch gekennzeichnet, dass** der optische Strahlteiler einen Reflexionskoeffizienten von 45% bis 99%, vorzugsweise 70% hat.

5. Eine Bildanzeigevorrichtung nach Anspruch 1 enthält noch mindestens eine achromatische Doppellinse (3, 4), die im Wesentlichen senkrecht zum optischen Hauptstrahlengang ausgerichtet ist und zwischen der Bildquelle und dem Strahlteiler angebracht ist und so angeordnet ist, um das Bild zu vergrößern, zu kolliminieren, und die optischen Fehler zu korrigieren.

6. Eine Bildanzeigevorrichtung nach Anspruch 1 enthält noch drei oder mehr Linsen (3, 4) die im Wesentlichen senkrecht zum optischen Hauptstrahlengang ausgerichtet und zwischen der Bildquelle und dem Strahlteiler angebracht sind und so angeordnet sind, um das Bild zu vergrößern, zu kolliminieren, und die optischen Fehler zu korrigieren.

7. Eine Bildanzeigevorrichtung nach Anspruch 1 noch **dadurch gekennzeichnet, dass** eine oder zwei Halterungsklammern über den ersten und zweiten Neigungs- und Drehmechanismus so angepasst sind, um den Strahlteiler in zwei Freiheitsgraden zu drehen, und jede Halterungsklammer hat einen Schlitz, um den Strahlteiler in einer oder zwei entgegengesetzten Richtungen zu bewegen, wodurch ein dritter Freiheitsgrad für den Strahlteiler möglich wird.

## Revendications

1. Un dispositif d'affichage d'images composé:
- d'un chemin optique principal (5) ;
- d'un boîtier du dispositif (8) qui peut être monté sur la tête de l'utilisateur ;
- d'un générateur d'images (1) accouplé au boîtier du dispositif et orienté sensiblement perpendiculaire au chemin optique principal, le générateur d'images est adapté pour être commandé par un signal à distance, afin de générer une image qui est transmise le long du chemin optique principal;
- d'un diviseur de faisceau (2) placé sur le chemin optique principal et orienté avec un angle d'approximativement 45° afin que le rayon de lumière qui se propage le long du chemin optique principal soit dévié selon un angle droit, faisant en sorte que l'image générée par le générateur d'images soit focalisée dans la pupille d'entrée de l'oeil humain ;
- d'au moins une, mais de préférence deux lentilles (3) et (4) orientées sensiblement perpendiculaire au chemin optique principal et placées entre le générateur d'images et le diviseur de faisceau, configurées afin d'amplifier, collimater et corriger les aberrations optiques sur l'image générée ;
le générateur d'images, le diviseur de faisceau et au moins une, mais de préférence deux lentilles, se trouvent dans une configuration d'alignement avec l'axe central (*on-axis*),
le dispositif incluant également un ou deux supports de montage (10) et (11) placé parallèles au chemin optique principal et qui font la liaison mécanique entre le diviseur de faisceau et le boîtier du dispositif, chaque un ou deux support de montage a un premier mécanisme de rotation à l'une des extrémités et un second mécanisme de rotation à l'autre, le premier mécanisme de rotation est fixé sur le boîtier du dispositif, tandis que le second mécanisme de rotation est fixé sur le diviseur de faisceau,
**caractérisé en ce que**,
le second mécanisme de rotation est accouplé au diviseur de faisceau grâce à une bride de fixation ou à tout autre moyen de fixation mécanique adapté pour permettre que le diviseur de faisceau glisse.

2. Un dispositif d'affichage d'images, conforme à la revendication 1, **caractérisé en ce que** le générateur d'images et au moins une lentille, de préférence deux, sont contenus à l'intérieur du boîtier du dispositif.

3. Un dispositif d'affichage d'images, conforme à la revendication 1, caractérisé également par le fait que le diviseur de faisceau est plat, courbe, en forme de prisme ou carré et qu'il soit situé à l'extérieur du boîtier du dispositif.

4. Un dispositif d'affichage d'images, conforme à la revendication 1, caractérisé également par le fait que le diviseur de faisceau a un coefficient de réflectivité de 45 % à 99 %, de préférence près de 70 %.

5. Un dispositif d'affichage d'images, conforme à la revendication 1, qui inclut également au moins une lentille *doublet* achromatique (3) et (4) orienté sensiblement perpendiculaire au chemin optique principal et placée entre le générateur d'images et le diviseur de faisceau et qui est configurée pour amplifier, collimater et corriger les aberrations optiques de l'image générée.

6. Un dispositif d'affichage d'images, conforme à la revendication 1, qui inclut également trois lentilles ou plus (3) et (4) orientée sensiblement perpendiculaires au chemin optique principal et placées entre le générateur d'images et le diviseur de faisceau et qui sont configurées pour amplifier, collimater et corriger les aberrations optiques de l'image générée.

7. Un dispositif d'affichage d'images, conforme à la revendication 1, caractérisé également par le fait qu'un ou deux supports de montage, sur le premier et le second mécanisme de rotation, sont adaptés pour faire tourner le diviseur de faisceau sur deux degrés de liberté de mouvement, chaque support de montage possédant une rainure qui permet de déplacer le diviseur de faisceau vers l'une des deux directions opposées, fournissant ainsi un troisième degré de liberté de mouvement au diviseur de faisceau.
